# EUROPÄISCHE PATENTSCHRIFT

(11) **EP 2 082 293 B1**
(45) Veröffentlichungstag und Bekanntmachung des Hinweises auf die Patenterteilung: **27.11.2019**
(21) Anmeldenummer: 06805467.5
(22) Anmeldetag: 18.10.2006
(51) Int. Cl.: G05B 15/02

(54) **VERFAHREN UND SYSTEM ZUM STEUERN EINER ELEKTRISCHEN ANLAGE**
METHOD AND SYSTEM FOR CONTROLLING AN ELECTRICAL INSTALLATION
PROCÉDÉ ET SYSTÈME DE COMMANDE D'UNE INSTALLATION ÉLECTRIQUE

(43) Veröffentlichungstag der Anmeldung: 29.07.2009
(73) Patentinhaber: Siemens Aktiengesellschaft, 80333 München (DE)
(72) Erfinder: JACHMANN, Thomas, 90530 Wendelstein (DE); KRAMER, Christian, 91452 Wilhermsdorf (DE)
(86) Internationale Anmeldenummer: PCT/DE2006/001870
(87) Internationale Veröffentlichungsnummer: WO 2008/046367

(56) Entgegenhaltungen:
- ALARCON R ET AL: "Distribution operation management system" TRANSMISSION AND DISTRIBUTION CONFERENCE AND EXPOSITION: LATIN AMERICA, 2004 IEEE/PES SAO PAULO, BRAZIL 8-11 NOV. 2004, PISCATAWAY, NJ, USA,IEEE, US, 8. November 2004 (2004-11-08), Seiten 657-662, XP010799940 ISBN: 0-7803-8775-9
- SCHELLSTEDE G ET AL: "A Distributed Energy Management System Based on Open Architecture Rules" IEEE/NTUA ATHENS POWER TECH-. CONFERENCE "PLANNING OPERATION AND CONTROL OF TODAYS ELECTRIC POWER SYSTEMS", Bd. 1, 5. September 1993 (1993-09-05), Seiten 114-119, XP010279021

## Beschreibung

Die Erfindung betrifft ein Verfahren und ein System zur Steuerung einer elektrischen Anlage mit einem graphisch basierten Steuerungssystem und einem georeferenzierten Informationssystem, in dem zumindest eine Komponente der elektrischen Anlage und eine mit der Komponente der elektrischen Anlage verbundene georeferenzierte Information anzeigbar ist.

Bisher wird in der Leittechnik von elektrischen Anlagen, insbesondere von Energieversorgungsnetzen, einem menschlichen Bediener ein zweigeteiltes und prinzipiell entkoppeltes Steuerungs- und Anzeigesystem bereitgestellt, wobei die entkoppelten Steuerungs- und Anzeigesysteme nicht oder nur sehr eingeschränkt miteinander interagieren.

Zur Steuerung von bestimmten Parametern einer elektrischen Anlage werden herkömmlicherweise so genannte übergeordnete Steuerungs- und Kontrollsystem, wie beispielsweise SCADA-Systeme (Supervisory Control and Data Access), verwendet, die, zumeist mit einer redundanten Architekturkonzeption, eine fast einhundertprozentige - zumeist zweifach abgesicherte - Überwachungs- und Kontrollsicherheit gewährleisten. Die graphische Abbildung des zu steuernden Energieversorgungsnetzes ist jedoch sehr grob und insbesondere im Hinblick auf die steuerbaren Komponenten des Energieversorgungsnetzes, wie beispielsweise Drosseln oder Leistungsschalter innerhalb eines elektrischen Hochspannungsnetzes, abgestimmt. Die Entfernungen zwischen den steuerbaren Komponenten des Energieversorgungsnetzes entsprechen häufig nicht den tatsächlichen Entfernungen und die Verbindungen werden nur als einzelne - zumeist nur als rechtwinklige - Linien im Gegensatz zum tatsächlichen Trassenverlauf der Verbindungskabel dargestellt.

Im Gegensatz dazu ermöglichen Geoinformationssysteme eine sehr detaillierte Darstellung der tatsächlichen Abständen und Größenverhältnisse der steuerbaren Komponenten und der Verbindungen, wobei schon alleine die Visualisierung der geobasierten Daten umfangreiche Rechnerressourcen verbraucht, so dass bisherige Geoinformationssysteme ausschließlich zur Darstellung von geobasierten Daten mit einer entsprechenden, zumeist topologischen, Karte dienen.

Aktuell werden in Leitwarten zur Steuerung von Energieversorgungsnetzen, insbesondere elektrische Hochspannungsnetzen, das SCADA-System zu direkten Steuerung des Energieversorgungsnetzes und das GIS-System zur Visualisierung von geographischen Daten weitgehend autark und unabhängig voneinander betrieben. Bedingt ist derzeit ein Wechsel zwischen den Leitungsdarstellungen des Energieversorgungsnetzes als Single-Line-Darstellungen im SCADA-System und der geographischen Repräsentanz im GIS-System möglich. Innerhalb des GIS-Systems ist es dem Bediener jedoch nicht möglich typische SCADA-Funktionalitäten, wie das Schalten von Netzkomponenten, zu nutzen. Das bedeutet für den Bediener einen Bruch im Arbeitsablauf, da der Bediener für die Steuerung vom GIS-System in das SCADA-System wechseln muss. Insbesondere in kritischen Situationen, wie einem teilweisen Ausfall des Energieversorgungsnetzes, verhindert die mangelnde Abstimmung und unterschiedliche Sicht in dem GIS-System und in dem SCADA-System eine schnelle Erfassung der Situation für den Bediener und kann damit zu einer fehlerhaften Bedienung durch den Bediener aufgrund einer falschen Erfassung der Darstellungen führen. Ebenfalls erschwert der ständige Wechsel zwischen der Darstellung der realen und damit intuitiv einfach erfassbaren Topologiesicht im GIS-System in die abstrakte komponentenorientierte Darstellung des SCADA-Systems dem Bediener ein kontinuierliches Verfolgen der Prozessabläufe innerhalb des Energieversorgungsnetzes, so dass diese Arbeitsweise der Überwachung von unterschiedlichen Darstellungsformen sehr ermüdend und damit zu Fehler führen kann.

So beschreibt die US 6,496,189 B1 ein Verfahren zur Darstellung von Datenblöcken einer dreidimensionalen Umgebung. Die Datenblöcke sind nach unterschiedlichen Auflösungen hierarchisch strukturiert. Eine Darstellungseinheit übermittelt ausgesuchte Koordinaten der darzustellenden Region, die eine bestimmte Auflösung in der darzustellenden Region, insbesondere entlang einer geplanten Flugroute, sicherstellt.

Die WO 2005/024667 A1 offenbart ein Verfahren und ein System zur Verknüpfung von georelevanten Daten mit einem korrespondierenden Georeferenzpunkt in einem Geoinformationssystem. Insbesondere die gezielte Darstellung von lokal relevanter Werbung auf einer Karte wird gemäß der dortigen Erfindung so vorgenommen, dass nach der Eingabe von entsprechenden georelevanten Daten hinsichtlich ihrer Relevanz für den ebenfalls vorzugebenden Georeferenzpunkt verglichen und bei vorliegender Relevanz die georelevanten Daten bezogen auf den Georeferenzpunkt dargestellt werden. Die WO 2006/074054 A1 offenbart ein entsprechendes Verfahren zur Relevanzbestimmung der georeferenzierten Information und des Georeferenzpunktes.

Schließlich ist aus der Publikation R. Alarcon, J. Yllisca: "Distribution Operation Management System"; Transmission and Distribution Conference and Exposition: Latin America, 2004, IEEE, Pes Sao Paulo, Brazil 08.-11.2004; Piscataway, NJ, USA, IEEE, US, 8.11.1002, Seiten 657-662, XP010799940; ISBN: 0-7803-8557-9 ein sogenanntes "Distribution Operating Management System" bekannt, dessen graphische Benutzeroberfläche ein sogenanntes "Map Window", also eine geographische Ansicht, umfasst.

Aus der Publikation G. Schellstede, W. Schröppel (Siemens AG); "A Distributed Energy Management System Based on Open Architecture Rules"; IEEE/NTUA ATHENS POWER TECH-. CONFERENCE "PLANNING OPERATION AND CONTROL OF TODAYS ELECTRIC POWER SYSTEMS", Bd. 1, 05.09.1993, Seiten 114-119, XP010279021 ist zudem eine besondere Ausgestaltung eines Energy Management Systems mit SCADA-Funktionalität bekannt.

Alle im Stand der Technik bekannten Verfahren und Systeme dienen entweder ausschließlich zur Darstellung von georeferenzierten Informationen oder ausschließlich zur Regelung und Steuerung von elektrischen Anlagen, insbesondere von Energieversorgungsnetzen.

Aufgabe der vorliegenden Erfindung ist es daher, eine Möglichkeit bereitzustellen, einem menschlichen Bediener eine intuitive Steuerung einer elektrischen Anlage zur Verfügung zustellen.

Gelöst wird die Aufgabe durch ein Verfahren gemäß dem Anspruch 1. Erfindungsgemäß ist vorgesehen, dass die georeferenzierte Information im georeferenzierten Informationssystem auswählbar ist und bei einer von einem Bediener vorgenommenen Änderung der georeferenzierten Information im georeferenzierten Informationssystem die Änderung hinsichtlich ihrer Relevanz für das graphisch basierten Steuerungssystem überprüft wird. Anschließend wird im Falle der vorliegenden Relevanz die zur geänderten georeferenzierten Information korrespondierende Handlungsanweisung für das graphisch basierten Steuerungssystem ermittelt und nachfolgend die korrespondierende Handlungsanweisung im graphisch basierten Steuerungssystem umgesetzt, wobei das georeferenzierte Informationssystem ein Geoinformationssystem (GIS) und das graphisch basierte Steuerungssystem ein Supervisory-Control-And-Data-Access (SCADA)-System ist. Die bisherige Parallelität des georeferenzierten Informationssystems, nämlich ein Geoinformationssystem (GIS), und des graphisch basierten Steuerungssystem, nämlich ein SCADA-System, wird durch die vorliegende Erfindung teilweise aufgehoben. Eine Auswahl oder Änderung im georeferenzierten Informationssystem wird zur Ermittlung einer entsprechenden korrespondierenden Handlungsanweisung genutzt, die im graphisch basierten Steuerungssystem umsetzbar ist. Hierdurch bleibt der hohe Sicherheitsstandard der graphisch basierten Steuerungssysteme gewahrt und der menschliche Bediener nutzt praktisch das georeferenzierten Informationssystem als Eingabemaske für seine Handlungsanweisungen. Durch die Überprüfung der Relevanz der geänderten georeferenzierten Information wird sichergestellt, dass ausschließlich für das graphisch basierte Steuerungssystem relevante Daten und Informationen im Rahmen der vorliegenden Erfindung verarbeitet werden.

In einer vorteilhaften Ausgestaltung des Verfahrens ist vorgesehen, dass nach der Ausführung der korrespondierenden Handlungsanweisung im graphisch basierten Steuerungssystem dem georeferenzierten Informationssystem die Ausführung der korrespondierenden Handlungsanweisung übermittelt wird. Hierdurch wird dem Bediener eine direkte Rückmeldung im georeferenzierten Informationssystem bei einer von ihm ausgewählten Änderung bereitgestellt, so dass der Bediener die Umsetzung ausschließlich im georeferenzierten Informationssystem verfolgen kann. So kann beispielsweise bei der Schaltung eines bisher offenen Leistungsschalters der Leistungsschalter im georeferenzierten Informationssystem rot markiert sein und nach der Auswahl der entsprechenden georeferenzierten Informationen im georeferenzierten Informationssystem und deren Umsetzung im graphisch basierten Steuerungssystem aufgrund der Rückmeldung der Leistungsschalter im georeferenzierten Informationssystem als im Betrieb befindlich mit grün markiert werden.

Für eine gute Übersichtlichkeit und für die Gewährleistung der Relevanz der georeferenzierten Information umfasst ein Kontextmenü die möglichen korrespondierenden Handlungsanweisungen für beispielsweise eine Komponente der elektrischen Anlage. Das Kentextmenü listet alle möglichen Handlungsanweisungen direkt auf, die durch einen Bediener auswählbar sind. Hierdurch reduziert sich zum einen die Prüfung der Relevanz und zum anderen kann eine unmittelbare Absetzung der ausgewählten Handlungsanweisungen an das graphisch basierte Steuerungssystem vorgenommen werden. Ebenfalls ist die georeferenzierte Information ein Symbol zumindest einer Komponente der elektrischen Anlage, wobei alle möglichen Handlungsanweisungen bezüglich der Komponente der elektrischen Anlage durch die Auswahl des Symbols ausgewählt werden können. Hierbei ist durch das Anklicken eines entsprechenden Symbols, beispielsweise eine Leistungstransformators in einem elektrischen Hochspannungsnetz, eine Auswahl von möglichen Betriebszuständen aufgrund der Auswahl der Handlungsanweisungen bzw. des Symbols möglich.

Es wird als Vorteil angesehen, dass die korrespondierende Handlungsanweisung ein unmittelbar im graphisch basierten Steuerungssystem umsetzbare Steuerungsanweisung ist. Da keine Transformation der im georeferenzierten Informationssystem ausgewählten Handlungsanweisung in eine für das graphisch basierte Steuerungssystem lesbare Handlungsanweisung vorgenommen werden muss, ist hierdurch insbesondere die Fehleranfälligkeit aufgrund der Transformation vermieden. Gleichzeitig ist gewährleistet, dass der Bediener die im georeferenzierten Informationssystem ausgewählte Handlungsanweisung als unmittelbar im graphisch basierten Steuerungssystem ausgeführte Steuerungsanweisung umgesetzt weiß.

Durch die bildliche Rückkopplung im georeferenzierten Informationssystem aufgrund der bedingten Änderungen zumindest einer Komponente der elektrischen Anlage aufgrund der korrespondierenden Handlungsanweisung wird dem Bediener vermittelt, dass die Anweisung im graphisch basierten Steuerungssystem umgesetzt wurde. Dies ist beispielsweise durch einen farblichen Wechsel eines im georeferenzierten Informationssystem ausgewählten Symbols von rot für bisher nicht im Betrieb und anschließend grün für in Betrieb aufgrund der letzten Handlungsanweisung anzeigbar.

Vorteilhafterweise wird die korrespondierende Handlungsanweisung hinsichtlich der zukünftige Änderungen der aktuellen Konfiguration der Komponente der elektrischen Anlage oder aufgrund der aktuellen Konfiguration der gesamten elektrischen Anlage auf Plausibilität überprüft und im Falle einer plausiblen Handlungsanweisung diese an das graphisch basierte Steuerungssystem weitergeleitet. Diese zusätzliche Sicherung verhindert, dass möglicherweise unerwünschte Handlungsanweisungen im georeferenzierten Informationssystem auswählbar sind aufgrund der aktuellen Konfiguration gerade nicht vom Bediener ausgewählt werden können.

Es wird als Vorteil angesehen, dass regelbasierte Systeme, insbesondere Expertensysteme und/oder neuronale Netze, die korrespondierende Handlungsanweisung aufgrund der Auswahl im georeferenzierten Informationssystem ermitteln und/oder die Plausibilität der korrespondierenden Handlungsanweisung auf der Grundlage einer Konfiguration zumindest einer Komponente der elektrischen Anlage überprüfen.

Die elektrische Anlage ist ein Energieversorgungsnetz, insbesondere ein elektrisches Hochspannungsnetz. Energieversorgungsnetz im Sinne der vorliegenden Erfindung ist jedes Energieversorgungssystem. Von der Definition umfasst sind ebenfalls Energieversorgungssysteme für fluide Medien, wie zum Beispiel ein Gaspipeline-System.

Weitere vorteilhafte Ausgestaltungen finden sich in den Unteransprüchen. Die vorliegende Erfindung wird anhand der Ausführungsbeispiele in den Figuren näher erläutert. Dabei zeigt beispielhaft die
- FIG. 1: ein Flussdiagramm des erfindungsgemäßen Verfahrens;
- FIG. 2: eine schematische Abbildung des erfindungsgemäßen Verfahrens.

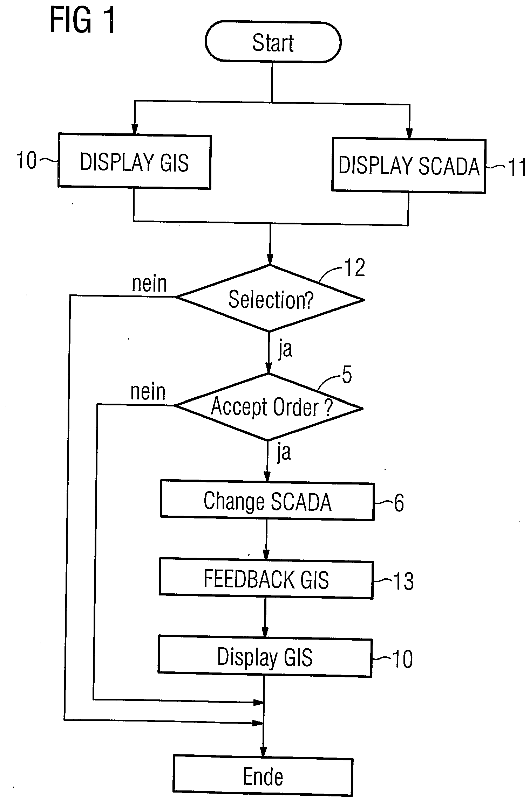

Die Figur FIG. 1 zeigt ein Flussdiagramm des erfindungsgemäßen Verfahrens. Das georeferenzierte Informationssystem, beispielsweise ein GIS-System, (nicht dargestellt) visualisiert eine Darstellung 10 der derzeit zu überwachenden Region in der Leitstelle. Ebenfalls wird im graphisch basierten Steuerungssystem, wie ein SCADA-System, (nicht dargestellt) das zu überwachende Energieversorgungsnetz, insbesondere ein elektrisches Hochspannungsnetz, einem Bediener als eine entsprechende SCADA-Darstellung 11 visualisiert. Eine Abfrage 12 überprüft, ob eine Auswahl im in der GIS-Darstellung 10 auf der Grundlage einer kontextbezogenen Auswahl des Bedieners aus möglichen Handlungsanweisungen 6 vorgenommen wurde. Im Falle des Vorliegens einer entsprechenden Auswahl wird erfindungsgemäß die Relevanz 5 der ausgewählten Handlungsanweisung überprüft. In diesem Zusammenhang kann ebenfalls die Plausibilität der ausgewählten Handlungsanweisung 6 überprüft werden. Liegt eine plausible und relevante Handlungsanweisung 6 vor, wird das SCADA-System entsprechend geändert und die entsprechende Komponente der elektrische Anlage gesteuert. Gleichzeitig erfolgt eine Rückmeldung 13 vom SCADA-System and das GIS-System, dass die Handlungsanweisung ausgeführt wurde, wobei eine entsprechende Änderung der elektrischen Anlage in einer neuen GIS-Darstellung 10 visualisiert wird.

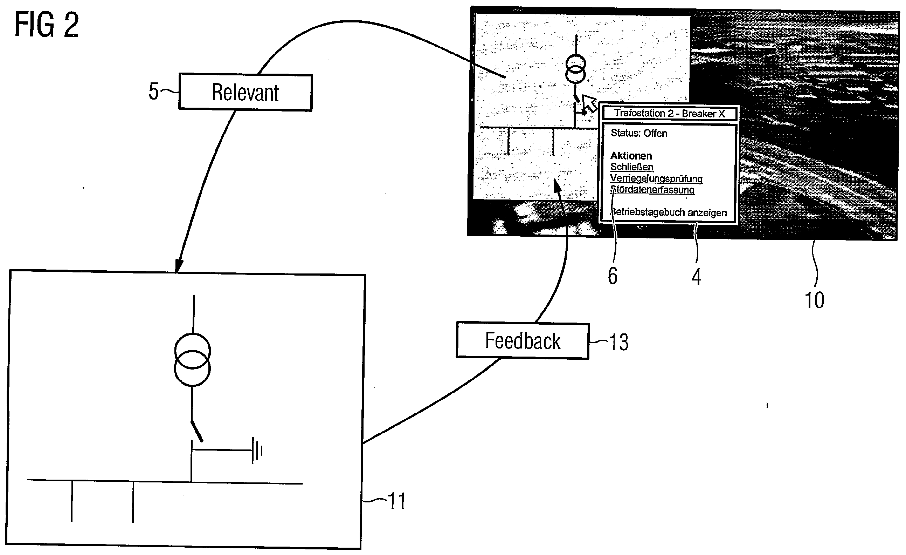

Die Figur FIG.2 zeigt eine schematische Abbildung des erfindungsgemäßen Verfahrens. Mit der Auswahl einer Handlungsanweisung 6 aus einem Kontextmenü 4 als georeferenzierte Information in der GIS-Darstellung 10 wird die Relevanz 5 der ausgewählten Handlungsanweisung 6 überprüft. Bei dem vorliegenden einer relevanten, durch den Bediener ausgewählten Handlungsanweisung 6 wird diese als Steuerungsanweisung im SCADA-System (nicht dargestellt) umgesetzt, was vorliegende durch die SCADA-Darstellung 11 dargestellt ist. Die Ausführung der Handlungsanweisung 6 als Steueranweisung im SCADA-System wird über eine Rückmeldung 13 dem GIS-System (nicht dargestellt) zurückgemeldet.

Innerhalb des GIS-Systems wird erfindungsgemäß eine Plattform geschaffen, um alle gängigen SCADA-Funktionalitäten als Handlungsanweisungen 6 direkt an der Komponente der elektrischen Anlage durchzuführen, so dass damit alle SCADA-Funktionalitäten auch im GIS-System nutzbar sind. Es geht daher im Wesentlichen darum, die derzeitige elektrische Anlage mit ihren Komponenten geographisch darzustellen und Interaktionen des Bedieners in Steueranweisungen für das SCADA-System zu interpretieren. So können beispielsweise bei der Steuerung eines elektrischen Hochspannungsnetzes als elektrische Anlage Wechsel in Alarmlisten oder Protokolle, in Betriebstagebuch als Handlungsanweisungen 6 vorgenommen werden. Handlungsanweisungen 6 können ebenfalls das Quittieren von Alarmen, das Auslösen von Schaltvorgängen, das Auslösen einer Stördatenerfassung, die Einzel- und Stufensteuerung von Betriebsmitteln, die manuelle Beeinflussung von Messwerten, die Bearbeitung der Schaltfolgen oder ähnliche Handlungen des Bedieners sein.

Die Vorteile der erfindungsgemäßen Integration zwischen dem SCADA-System und dem GIS-System liegen im besseren Arbeitsablauf für den Bediener. Die Art der Darstellung des Energieversorgungsnetzes ändert nichts an den Funktionalitäten und der Steueranweisungen im SCADA-System in Form der auswählbaren Handlungsanweisungen im GIS-System. Die Funktionalität des SCADA-Systems und damit der hohe Sicherheitsaspekt dieses Systems bleibt vollständig erhalten. Zusätzlich wird hierdurch für den Bediener ein durchgängiges Erscheinungsbild der Darstellung 10 ausschließlich im GIS-System geschaffen, so dass der Bediener nicht zwei Systeme überwachen bzw. zwischen den Darstellungen 10,11 wechseln muss.

## Patentansprüche

1. Verfahren zur Steuerung einer elektrischen Anlage mit einem graphisch basierten Steuerungssystem und einem georeferenzierten Informationssystem, in dem zumindest eine Komponente der elektrischen Anlage und eine mit der Komponente der elektrischen Anlage verbundene georeferenzierte Information (4) anzeigbar ist,
**dadurch gekennzeichnet, dass**
a) die georeferenzierte Information (4) im georeferenzierten Informationssystem auswählbar ist und
b) bei einer von einem Bediener vorgenommenen Änderung der georeferenzierten Information (4) im georeferenzierten Informationssystem die Änderung hinsichtlich ihrer Relevanz (5) für das graphisch basierte Steuerungssystem überprüft wird,
c) anschließend im Falle der vorliegenden Relevanz (5) die zur geänderten georeferenzierten Information (4) korrespondierende Handlungsanweisung (6) für das graphisch basierte Steuerungssystem ermittelt und
d) nachfolgend die korrespondierende Handlungsanweisung (6) im graphisch basierten Steuerungssystem umgesetzt wird,
wobei das georeferenzierte Informationssystem ein Geoinformationssystem (GIS) und das graphisch basierte Steuerungssystem ein Supervisory-Control-And-Data-Access (SCADA)-System ist.

2. Verfahren nach Anspruch 1,
**dadurch gekennzeichnet, dass** nach der Ausführung der korrespondierende Handlungsanweisung (6) im graphisch basierten Steuerungssystem dem georeferenzierten Informationssystem die Ausführung in Form einer Rückmeldung (13) der korrespondierenden Handlungsanweisung (6) übermittelt wird.

3. Verfahren nach einem der Ansprüche 1 bis 2,
**dadurch gekennzeichnet, dass** die georeferenzierte Information (4) ein Kontextmenü mit möglichen korrespondierenden Handlungsanweisungen (6) umfasst.

4. Verfahren nach einem der Ansprüche 1 bis 3,
**dadurch gekennzeichnet, dass** die georeferenzierte Information (4) ein Symbol (7) zumindest einer Komponente der elektrischen Anlage ist, wobei mögliche Handlungsanweisungen (6) bezüglich der Komponente der elektrischen Anlage durch die Auswahl des Symbols (7) ausgewählt werden.

5. Verfahren nach einem der Ansprüche 1 bis 4,
**dadurch gekennzeichnet, dass** die korrespondierende Handlungsanweisung (6) ein unmittelbar im graphisch basierten Steuerungssystem umsetzbare Steuerungsanweisung ist.

6. Verfahren nach einem der Ansprüche 1 bis 5,
**dadurch gekennzeichnet, dass** durch die korrespondierende Handlungsanweisung (6) bedingte Änderungen in zumindest einer Komponente der elektrischen Anlage im georeferenzierten Informationssystem angezeigt wird.

7. Verfahren nach einem der Ansprüche 1 bis 6,
**dadurch gekennzeichnet, dass** durch die korrespondierende Handlungsanweisung (6) bedingte zukünftige Änderungen hinsichtlich ihrer Plausibilität aufgrund der aktuellen Konfiguration der Komponente der elektrischen Anlage und/oder aufgrund der aktuellen Konfiguration der elektrischen Anlage überprüft und im Falle einer plausiblen Handlungsanweisung (6) diese an das graphisch basierte Steuerungssystem weitergeleitet wird.

8. Verfahren nach einem der Ansprüche 1 bis 7,
**dadurch gekennzeichnet, dass** regelbasierte Systeme (8), insbesondere Expertensysteme und/oder neuronale Netze, die korrespondierende Handlungsanweisung (6) aufgrund der Auswahl in georeferenzierten Informationssystem ermitteln und/oder die Plausibilität der korrespondierenden Handlungsanweisung (6) auf der Grundlage einer Konfiguration zumindest einer Komponente der elektrischen Anlage überprüfen.

9. Verfahren nach einem der Ansprüche 1 bis 8,
**dadurch gekennzeichnet, dass** die elektrische Anlage ein Energieversorgungsnetz, insbesondere ein elektrisches Hochspannungsnetz, ist.

10. System mit Mitteln zur Durchführung des Verfahrens nach einem der Ansprüche 1 bis 9.

11. Computerprogrammprodukt, das in einem computerlesbaren Medium gespeichert ist und computerlesbare Programmtitel umfasst, mittels derer ein Computer veranlasst wird, ein Verfahren nach einem der vorhergehenden Ansprüche 1 bis 9 durchzuführen, wenn das Programm in dem Computer läuft.

## Claims

1. Method for controlling an electrical installation using a graphics-based control system and a geo-referenced information system, in which at least one component of the electrical installation and one item of geo-referenced information (4) linked to the component of the electrical installation can be displayed,
**characterized in that**
a) the geo-referenced information (4) can be selected in the geo-referenced information system and
b) in the case of a change of the geo-referenced information (4) performed by an operator in the geo-referenced information system, the change is checked with regard to its relevance (5) for the graphics-based control system,
c) following this, if relevance (5) exists, the operating procedure (6) corresponding to the changed geo-referenced information (4) is determined for the graphics-based control system and
d) following this, the corresponding operating procedure (6) is implemented in the graphics-based control system,
wherein the geo-referenced information system is a geo-information system (GIS) and the graphics-based control system is a supervisory control and data access (SCADA) system.

2. Method according to Claim 1,
**characterized in that**,
after the execution of the corresponding operating procedure (6) in the graphics-based control system, the execution is transmitted to the geo-referenced information system in the form of a feedback message (13) of the corresponding operating procedure (6).

3. Method according to one of Claims 1 to 2,
**characterized in that**
the geo-referenced information (4) comprises a context menu with possible corresponding operating procedures (6).

4. Method according to one of Claims 1 to 3,
**characterized in that**
the geo-referenced information (4) is a symbol (7) of at least one component of the electrical installation, possible operating procedures (6) with respect to the component of the electrical installation being selected by selecting the symbol (7).

5. Method according to one of Claims 1 to 4,
**characterized in that**
the corresponding operating procedure (6) is a control instruction which can be implemented directly in the graphics-based control system.

6. Method according to one of Claims 1 to 5,
**characterized in that**
changes, due to the corresponding operating procedure (6), in at least one component of the electrical installation are displayed in the geo-referenced information system.

7. Method according to one of Claims 1 to 6,
**characterized in that**
future changes due to the corresponding operating procedure (6) are checked with regard to their plausibility on the basis of the current configuration of the component of the electrical installation and/or on the basis of the current configuration of the electrical installation and, in the case of a plausible operating procedure (6), the latter is forwarded to the graphics-based control system.

8. Method according to one of Claims 1 to 7,
**characterized in that**
rule-based systems (8), particularly expert systems and/or neural networks, determine the corresponding operating procedure (6) on the basis of the selection in the geo-referenced information system and/or check the plausibility of the corresponding operating procedure (6) on the basis of a configuration of at least one component of the electrical installation.

9. Method according to one of Claims 1 to 8,
**characterized in that**
the electrical installation is an electricity supply system, particularly an electrical high-voltage system.

10. System with means for carrying out the method according to one of Claims 1 to 9.

11. Computer program product which is stored in a computer-readable medium and comprises computer-readable program titles by means of which a computer is caused to perform a method according to one of the preceding Claims 1 to 9 when the program is running in the computer.

## Revendications

1. Procédé de commande d'une installation électrique par un système de commande graphique et un système d'information géoréférencée, dans lequel au moins un élément de l'installation électrique et une information (4) géoréférencée, reliée à l'élément de l'installation électrique, peuvent être affichés, **caractérisé en ce que**
a) l'information (4) géoréférencée peut être choisie dans le système d'information géoréférencée et
b) s'il se produit une modification effectuée par un opérateur de l'information (4) géoréférencée dans le système d'information géoréférencée, la pertinence (5) de la modification pour le système de commande graphique est contrôlée,
c) ensuite, dans le cas où la pertinence (5) est présente, l'instruction (6) de manipulation correspondant à l'information (4) géoréférencée modifiée pour le système de commande graphique est déterminée et
d) ensuite, l'instruction (6) de manipulation correspondante est transformée dans le système de commande graphique,
dans lequel le système d'information géoréférencée est un système (GIS) de géo-information et le système de commande graphique est un système Supervisory-Control-And-Data Access (SCADA).

2. Procédé suivant la revendication 1,
**caractérisé en ce qu'**
après l'exécution de l'instruction (6) de manipulation correspondante dans le système de commande graphique, l'exécution sous la forme d'un accusé de réception (13) de l'instruction (16) de manipulation correspondante est transmise au système d'information géoréférencé.

3. Procédé suivant l'une des revendications 1 à 2,
**caractérisé en ce que**
l'information (4) géoréférencée comprend un menu de contexte ayant des instructions (6) de manipulation correspondantes possibles.

4. Procédé suivant l'une des revendications 1 à 3,
**caractérisé en ce que**
l'information (4) géoréférencée est un symbole (7) d'au moins un élément de l'installation électrique, des instructions (6) de manipulation possibles concernant l'élément de l'installation électrique étant choisies par le choix du symbole (7).

5. Procédé suivant l'une des revendication 1 à 4,
**caractérisé en ce que**
l'instruction (6) de manipulation correspondante est une instructions de commande transposable directement dans le système de commande graphique.

6. Procédé suivant l'une des revendications 1 à 5,
**caractérisé en ce que**
des modifications dues à l'instruction (6) de manipulation correspondante, dans au moins un élément de l'installation électrique, sont affichées dans le système d'information géoréférencé.

7. Procédé suivant l'une des revendications 1 à 6,
**caractérisé en ce que**,
par les modifications à venir dues à l'instruction (6) de manipulation correspondante, on en contrôle la vraisemblance sur la base de la configuration en cours de l'élément de l'installation électrique et/ou sur la base de la configuration en cours de l'installation électrique et, dans le cas d'une instruction (6) de manipulation vraisemblable, on l'achemine au système de commande graphique.

8. Procédé suivant l'une des revendications 1 à 7,
**caractérisé en ce que**
des systèmes (8) reposant sur une règle, notamment des systèmes experts et/ou des réseaux neuronaux, déterminent l'instruction (6) de manipulation correspondante sur la base du choix dans le système d'information géoréférencée et/ou contrôlent la vraisemblance de l'instruction (6) de manipulation correspondante sur la base d'une configuration d'au moins un élément de l'installation électrique.

9. Procédé suivant l'une des revendications 1 à 8,
**caractérisé en ce que**
l'installation électrique est un réseau d'alimentation en énergie, notamment un réseau électrique de haute tension.

10. Système ayant des moyens pour effectuer le procédé suivant l'une des revendications 1 à 9.

11. Produit de programme d'ordinateur, qui est mémorisé dans un support déchiffrable par ordinateur et comprend des titres de programme déchiffrables par ordinateur, au moyen desquels un ordinateur fait qu'un procédé suivant l'une des revendications 1 à 9 précédentes s'effectue, lorsque le programme passe dans l'ordinateur.
